# EUROPEAN PATENT APPLICATION

(11) **EP 3 795 977 A1**
(43) Date of publication of application: **24.03.2021**
(21) Application number: 19197886.5
(22) Date of filing: 17.09.2019
(51) Int. Cl.: G01N 1/24, F01N 1/24, G10K 11/178

(54) **SENSOR MODULE WITH FAN NOISE REDUCTION**

(71) Applicant: Sensirion Automotive Solutions AG, 8712 Stäfa ZH (CH)
(72) Inventor: BECKER, Manuel, 8712 Staefa ZH (CH)
(74) Representative: Schulz Junghans Patentanwälte PartGmbB

(57) **Abstract**

The present invention relates to a sensor module (1) for measuring at least one measurand, wherein the sensor module (1) comprises: a housing (2) surrounding an internal space (20) of the housing (2); a flow channel (21) extending through the housing (2) and comprising an inlet section (22) and an outlet section (23); a sensor (3) configured to measure at least one measurand of a flow passing the sensor (3); and a fan (4) arranged in the internal space (20), wherein the fan (4) comprises a rotor (40) that is rotatable about a rotation axis (z), wherein the fan (4) is configured to generate a flow (L) in said flow channel (21) flowing through the inlet section (22) and to the outlet section (23) so that the flow (L) passes the sensor (3). According to the present invention, the sensor module (1) comprises at least one sound-absorbing material portion (5) forming an internal surface section (50) of the flow channel (21) to reduce noise generated by the fan (4).

## Description

The present invention relates to a sensor module for measuring at least one measurand.

Such sensor modules can be used, for example, in a vehicle to measure the temperature in a passenger compartment and/or to detect particulate matter.

Frequently, such sensor modules are equipped with fans that generate a flow that is fed to a sensor of the sensor module, where the sensor upstream of the fan is arranged coaxial to the rotation axis of the fan and is connected to a printed circuit board via a cable connection or rigid solder connections. The flow is usually sucked axially, i.e. in the direction of the axis of rotation, and output in the radial direction of the fan rotor.

Particularly, DE 100 21 067 A1 describes an electrically driven fan for ventilating a sensor, e.g. in the form of a temperature sensor, wherein the sensor is located at or in the inlet of the fan housing. The sensor is held by a support rod and positioned coaxially to the rotation axis of the fan. Further, sensor modules using fans are also disclosed in DE 202019101992 U1 and WO 2018100209 A2.

Furthermore, EP 3 258 241 A2 discloses a particulate matter sensor device.

Due to the fan, such sensor modules often cause a corresponding noise level, which is usually perceived as disturbing and undesirable by persons who are in the vicinity of the sensor module.

Therefore, it is an objective of the present invention to provide a sensor module that reduces the afore-mentioned disadvantage.

This problem is solved by a sensor module having the features of claim 1. Preferred embodiments of the sensor module are stated in the sub claims and are described below.

According to claim 1, a sensor module for measuring at least one measurand is disclosed, wherein the sensor module comprises:
- a housing surrounding an internal space of the housing,
- a flow channel extending through the housing and having an inlet section and an outlet section,
- at least one sensor configured to measure at least one measurand of a flow passing the sensor, and
- a fan that can be arranged in the internal space, wherein the fan can comprise a rotor that is rotatable about a rotation axis, wherein the fan is configured to generate a flow (for example an airflow) in said flow channel flowing through the inlet section and to the outlet section so that the flow passes the sensor.

Particularly, in the framework of the present invention, the notion "sound-absorbing material portion" also includes sound-deadening material portions among possible material portions that help to reduce noise. The sound-absorbing material portion can also be denoted as a sound-absorbing (or sound deadening) structure that particularly forms a surface on which sound waves generated by the fan impinge.

According to the present invention, the sensor module comprises at least one sound-absorbing material portion forming an internal surface section of the flow channel to reduce noise generated by the fan.

In an embodiment of the present invention, the sensor can be arranged in the inlet section and/or in the internal space of the housing. Alternatively, the sensor can be arranged outside said internal space in front of the inlet section (for example in front of an inlet formed in the housing).

Particularly, the flow channel comprises an inlet at an end of the inlet section, wherein a gas (for example air) can enter the flow channel through said inlet. Further, the flow channel comprises an outlet an end of the outlet section, wherein air can leave the flow channel through said outlet. Furthermore, particularly, the fan comprises an intake side via which air is sucked into the fan. Further, particularly, the fan comprises a discharge side, via which air is discharged out of the fan.

Furthermore, according to an embodiment of the present invention, the at least one sound-absorbing material portion forms at least one of: a honey combed structure, a plurality of protrusions, a plurality of pyramids, a plurality of cuboids, a plurality of cylinders. Particularly, said cylinders are circular cylinders.

Particularly, in an embodiment of the invention, the protrusions (for example pyramids, cuboids, cylinders etc.) are arranged such that they form a surface comprising alternating peaks and valleys with respect to the flowing direction of the flow in the flow channel.

Furthermore, according to an embodiment of the present invention, the at least one sound-absorbing material portion is formed by the housing.

Further, according to an embodiment of the present invention, the at least one sound-absorbing material portion is integrally formed with the housing, i.e., the first sound-absorbing material portion forms an integral portion of the housing that is formed out of the same material as adjacent portions of the housing.

Furthermore, in an embodiment of the invention, the at least one sound-absorbing material portion is an injection-molded material portion that is injection molded together with adjacent portions of the housing (e.g. so as to form one piece).

Furthermore, according to an embodiment, the at least one sound-absorbing material portion is comprised by a mounting bracket for mounting the housing to a surface (for example of a separate device), wherein the mounting bracket delimits a portion of the flow channel, particularly of the outlet section of the flow channel. In an embodiment, the at least one sound-absorbing material portion is integrally formed with the mounting bracket. Particularly the mounting bracket is configured for mounting the housing to the surface using screws and/or bolts.

Furthermore, in an embodiment of the invention, the at least one sound-absorbing material portion is an injection-molded material portion that is injection molded together with adjacent portions of the mounting bracket (e.g. so as to form one piece).

Particularly, in an embodiment, the mounting bracket comprises a portion facing an opening of the housing that connects a portion of the flow channel extending inside the housing to the portion of the flow channel delimited by the mounting bracket.

Furthermore, according to an embodiment, the sensor module comprises a printed circuit board arranged in the internal space.

Further, in an embodiment, said at least one sensor is arranged on the printed circuit board.

Furthermore, according to an embodiment of the present invention, the sensor module comprises a connector arranged on the printed circuit board for making electrical contact with the sensor module.

Furthermore, according to an embodiment of the present invention, the fan comprises a motor configured to rotate the rotor about the rotation axis, wherein particularly the motor is electrically connected to the printed circuit board.

Further, according to an embodiment of the present invention, the flow flows in a flow direction in the inlet section of the flow channel that extends at an angle to the axis of rotation which is in the range from 45° to 90°.

Furthermore, according to an embodiment of the present invention, the at least one sensor is arranged upstream of the fan with respect to the flow direction of the flow.

Further, according to an embodiment of the present invention, said angle is in the range from 60° to 90°, in particular in the range from 75° to 90°, in particular in the range from 80° to 90°, the angle preferably being 90°.

Furthermore, according to an embodiment of the present invention, the at least one measurand is one of the following measurands: a particulate matter parameter of the flow, a particulate matter mass concentration of the flow, a particulate matter number concentration of the flow, a mean particulate matter mass, a temperature of the flow passing the sensor, a relative air humidity of the flow passing the sensor, a gas concentration of the flow passing the sensor.

Particularly, the flow can be a gas flow (for example comprising air) or an aerosol, i.e., a colloid of solid particles and/or liquid droplets in air or another gas. Examples of aerosols are particulate matter in air, smoke, haze, dust and fog.

In the context of the present invention, the term "particulate matter" refers to an ensemble of solid and/or liquid particles suspended in a gas, preferably in air. This mixture may include both organic and inorganic particles, such as dust, pollen, soot, smoke, and liquid droplets. Subtypes of particulate matter include "PM10" which are particles with a diameter of 10 micrometers or less, "PM2.5" which are particles with a diameter of 2.5 micrometers or less, and "PM1.0" which are particles with a diameter of 1 micrometer or less.

Furthermore, according to an embodiment, the fan is arranged on the printed circuit board.

According to a further embodiment of the present invention, said internal surface section of the flow channel is an internal surface section of the inlet section of the flow channel.

Particularly, in an embodiment, said internal surface section of the inlet section of the flow channel is formed by a bottom wall of the inlet section of the flow channel, which bottom wall faces an intake side of the fan in a direction of the rotation axis of the fan.

Particularly, according to an embodiment of the present invention, said internal surface section of the inlet section of the flow channel comprises a portion that faces the intake side in the direction of the rotation axis of the fan, i.e. said internal surface section overlaps with the intake side.

Furthermore, according to an embodiment, said internal surface section of the inlet section of the flow channel extends from the inlet of the inlet section of the flow channel up to a lateral wall of the housing (or of the flow channel), which lateral wall is connected to said bottom wall and particularly extends along the rotation axis of the fan.

Furthermore, according to an alternative embodiment, said first internal surface section extends from the inlet of the inlet section of the flow channel and ends spaced apart from a lateral wall of the housing (or of the flow channel), which lateral wall is connected to said bottom wall and particularly extends along the rotation axis of the fan.

Furthermore, according to yet another alternative embodiment of the present invention, said internal surface section of the inlet section of the flow channel does not overlap with an intake side of the fan, i.e., there is no portion of the internal surface section of the inlet section of the flow channel that faces the intake side of the fan in the direction of the rotation axis of the fan.

Furthermore, according to an embodiment of the present invention, a portion of the inlet section of the flow channel protrudes from a lateral wall of the housing and forms said inlet at an end of said portion of the inlet section of the flow channel. Particularly, through this inlet, a gas (for example air) can enter the flow channel (see above).

Furthermore, according to an alternative embodiment of the invention at hand, the internal surface section of the inlet section of the flow channel does not protrude past the intake side in a direction parallel to the intake side. Here, particularly, the inlet of the inlet section of the flow channel is formed flush with a lateral wall of the housing in the lateral wall. Also here, a gas (for example air) can enter the flow channel through the inlet.

According to an embodiment, the sensor module comprises a further sound-absorbing material portion forming a further internal surface section of the inlet section of the flow channel to reduce noise generated by the fan, wherein the further sound-absorbing material portion of the inlet section of the flow channel faces the at least one sound-absorbing material portion of the inlet section of the flow channel in the direction of the rotation axis of the fan.

Particularly, according to an embodiment, the further sound-absorbing material portion of the inlet section of the flow channel is comprised by the housing.

According to a further embodiment, the further sound-absorbing material portion of the inlet section of the flow channel is integrally formed with the housing, i.e., the further sound-absorbing material portion forms an integral portion of the housing that is formed out of the same material as adjacent portions of the housing.

Furthermore, according to an embodiment of the present invention, the further sound-absorbing material portion of the inlet section of the flow channel forms at least one of: a honey combed structure, a plurality of protrusions, a plurality of pyramids, a plurality of cuboids, a plurality of cylinders, particularly a plurality of circular cylinders.

Particularly, in an embodiment, the protrusions (for example pyramids, cuboids, cylinders etc.) are arranged such that they form a surface comprising alternating peaks and valleys with respect to the flowing direction of the flow in the flow channel.

Furthermore, in an embodiment, the further sound-absorbing material portion of the inlet section of the flow channel is an injection-molded material portion that is particularly injection molded together with adjacent portions of the housing.

Particularly, in an embodiment, said further internal surface section of the inlet section of the flow channel is formed by a top wall of the inlet section of the flow channel, which top wall faces the bottom wall and is arranged adjacent the intake side of the fan.

According to an embodiment of the present invention, said further internal surface section of the inlet section of the flow channel extends from the inlet of the inlet section of the flow channel up to the intake side of the fan.

Furthermore, according to yet another embodiment of the invention at hand, said internal surface section of the flow channel is an internal surface section of the outlet section of the flow channel.

According to an embodiment, said internal surface section of the outlet section of the flow channel is formed by a top wall of the outlet section of the flow channel, which top wall faces a discharge side of the fan or is arranged adjacent a discharge side of the fan.

Furthermore, according to an embodiment, said internal surface section of the outlet section of the flow channel comprises a portion that faces a discharge side of the fan in the direction of the rotation axis of the fan, i.e. the internal surface section of the outlet section of the flow channel overlaps with the discharge side of the fan.

Further, according to an embodiment, said internal surface section of the outlet section of the flow channel extends from an outlet of the outlet section of the flow channel up to a lateral wall of the housing (or of the flow channel), which lateral wall is connected to said top wall and particularly extends along the rotation axis of the fan.

Furthermore, according to an alternative embodiment, said internal surface section of the outlet section of the flow channel extends from the outlet of the outlet section of the flow channel and ends spaced apart from a lateral wall of the housing (or of the flow channel), which lateral wall is connected to said top wall and particularly extends along the rotation axis of the fan.

According to yet another alternative embodiment, said internal surface section of the outlet section of the flow channel does not overlap with a discharge side of the fan, i.e. there is no portion of the internal surface section of the outlet section of the flow channel that faces the discharge side of the fan in the direction of the rotation axis of the fan.

Furthermore, according to an embodiment, a portion of the outlet section of the flow channel protrudes from a lateral wall of the housing and forms the outlet at an end of said portion of the outlet section of the flow channel.

According to a further embodiment of the present invention, said internal surface section of the outlet section of the flow channel is formed by a lateral wall of the housing (or of the outlet section of the flow channel), which lateral wall is arranged adjacent an outlet of the outlet section of the flow channel and faces a discharge side of the fan, particularly in a direction perpendicular to the rotation axis of the fan. However, the internal surface section of the outlet section of the flow channel may also be formed by other parts of the housing. Particularly, the internal surface section can be formed by a lid of the housing, wherein particularly the housing can be a two-part housing comprising the lid connected to a separate bottom part of the housing.

Furthermore, according to an embodiment of the present invention, the sensor module comprises a further sound-absorbing material portion forming a further internal surface section of the outlet section of the flow channel to reduce noise generated by the fan, wherein the further sound-absorbing material portion of the outlet section of the flow channel faces the at least one sound-absorbing material portion of the outlet section of the flow channel (for example in the direction of the rotation axis of the fan) or is arranged adjacent said at least one sound-absorbing material portion of the outlet section of the flow channel.

Further, according to an embodiment of the present invention, the further sound-absorbing material portion of the outlet section of the flow channel is comprised by the housing.

Furthermore, according to an embodiment, the further sound-absorbing material portion of the outlet section of the flow channel is integrally formed with the housing, i.e., the further sound-absorbing material portion forms an integral portion of the housing that is formed out of the same material as adjacent portions of the housing.

Further, according to an embodiment of the present invention, the further sound-absorbing material portion of the outlet section of the flow channel forms at least one of: a honey combed structure, a plurality of protrusions, a plurality of pyramids, a plurality of cuboids, a plurality of cylinders, particularly a plurality of circular cylinders.

Particularly, in an embodiment, the protrusions (for example pyramids, cuboids, cylinders etc.) are arranged such that they form a surface comprising alternating peaks and valleys in the flowing direction of the flow.

Furthermore, in an embodiment, the further sound-absorbing material portion of the outlet section of the flow channel is an injection-molded material portion that is injection molded together with adjacent portions of the housing.

Furthermore, according to an embodiment, said further internal surface section of the outlet section of the flow channel is formed by a bottom wall of the outlet section of the flow channel, which bottom wall particularly faces the top wall and is arranged adjacent the discharge side of the fan.

Further, according to an embodiment, said further internal surface section of the outlet section of the flow channel extends from the outlet of the outlet section of the flow channel up to the discharge side of the fan.

Furthermore, according to an embodiment, said further internal surface section of the outlet section of the flow channel is formed by a bottom wall of the outlet section of the flow channel, which bottom wall faces the outlet of the outlet section of the flow channel and extends perpendicular to said lateral wall. In other words: the further internal surface section extends at an angle, particularly 90°, with respect to the internal surface section.

According to yet another embodiment, said internal surface section of the flow channel is an internal surface section of the outlet section of the flow channel, wherein said internal surface section of the outlet section of the flow channel is formed by the mounting bracket.

Particularly, in an embodiment, said internal surface section is formed by said portion of the mounting bracket that faces said opening of the housing (see above).

Furthermore, the mounting bracket can comprise a first and a second arm, wherein the first arm is connected to a first end of said portion of the mounting bracket and the second arm is connected to a second end of said portion of the mounting bracket, particularly such that the two arms and said portion of the mounting bracket form a U-shaped structure.

In an embodiment, the arms of the mounting bracket can run parallel to one another. Furthermore, in an embodiment, the first arm extends along a first lateral wall of the housing towards a bottom wall of the housing and the second arm extends along a second lateral wall of the housing towards the bottom wall of the housing. Further, the first lateral wall of housing faces away from the second lateral wall of the housing.

Furthermore, in an embodiment, the first arm comprises an end section, particularly an angled end section, that can be flush with a surface of the bottom wall of the housing. Similarly, the second arm preferably comprises an end section, particularly an angled end section, that can be flush with said surface of the bottom wall of the housing, too.

Furthermore, in an embodiment, the opening of the housing via which the flow channel is led out of the housing, is arranged between the two arms of the mounting bracket.

Furthermore, in an embodiment, the end sections of the arms each comprise a through-opening for inserting a screw or bolt for fasting the mounting bracket to a surface (for example of another device). Furthermore, the portion of the mounting bracket and the arms of the mounting bracket delimit a portion of the outlet section of the flow channel, wherein the arms and the portion of the mounting bracket particularly define two opposing outlets of the outlet section of the flow channel.

Further, according to yet another embodiment of the present invention, the sensor module comprises a further sound-absorbing material portion forming an internal surface section of the outlet section of the flow channel to reduce noise generated by the fan.

Further, according to an embodiment, said internal surface section of the outlet section of the flow channel is formed by a top wall of the outlet section of the flow channel, which top wall particularly faces a bottom wall of the outlet section of the flow channel in a direction of the rotation axis of the fan.

Furthermore, according to an embodiment, said internal surface section of the outlet section of the flow channel comprises a portion that faces a discharge side of the fan in the direction of the rotation axis of the fan, i.e. the internal surface section of the outlet section of the flow channel overlaps with the discharge side of the fan.

Further, according to an embodiment, said internal surface section of the outlet section of the flow channel extends from an outlet of the outlet section of the flow channel up to a lateral wall of the housing (or of the flow channel), which lateral wall is connected to said top wall and particularly extends along the rotation axis of the fan.

Furthermore, according to an embodiment, said internal surface section of the outlet section of the flow channel does not overlap with a discharge side of the fan (i.e. there is no portion of the internal surface section of the outlet section of the flow channel that faces the discharge side of the fan in the direction of the rotation axis of the fan).

Further, in an embodiment, said internal surface section of the outlet section of the flow channel extends from an outlet of the outlet section of the flow channel and ends spaced apart from a lateral wall of the housing (or of the flow channel), which lateral wall is connected to said top wall and particularly extends along the rotation axis of the fan.

Furthermore, according to an embodiment, a portion of the outlet section of the flow channel protrudes from a lateral wall of the housing and forms the outlet of the flow channel at an end of said portion of the outlet section of the flow channel.

Furthermore, according to an embodiment, the fan is a radial fan, wherein the rotor is configured to suck a gas (for example air) in the direction of the axis of rotation and to output the gas in a radial direction of the rotor, which radial direction runs perpendicular to the axis of rotation.

Further, according to an alternative embodiment, the fan is an axial fan, wherein the rotor is configured to suck a gas (for example air) in the direction of the axis of rotation and to output the gas in the direction of the axis of rotation, too.

Preferably, in the sensor module according to the present invention, all components are directly connected to a single printed circuit board (PCB). The flow is adapted in such a way that the at least one sensor is directly exposed to the flow guided through the flow channel

Thus, the present invention allows using the sensor module with higher flow rates / fan speeds at a lower noise generation. Particularly, cheaper / noisier fans can be used for applications with lower maximal noise levels. Furthermore, the invention achieves a small housing design with lower noise emission. Since the housing material itself can be used, no additional parts/materials are necessary in this case, which also simplifies the assembly.

In the following, embodiments of the present invention as well as further features and embodiments will be described with reference to the Figures, wherein:
- Fig. 1: shows a cross sectional view of an embodiment of a sensor module according to the present invention comprising an axial fan, wherein the sensor module comprises a sound-absorbing material portion forming an internal surface section of the flow channel to reduce noise generated by the fan, wherein said sound-absorbing material portion / internal surface section is arranged in an inlet section of the flow channel upstream the fan;
- Figs. 2A - 2C: show schematical cross sections of different embodiments of a sensor module according to the present invention comprising an axial fan, wherein the sound-absorbing material portion is arranged in the inlet section of the flow channel;
- Figs. 3A - 3B: show schematical cross sections of different embodiments of a sensor module according to the present invention comprising an axial fan, wherein the sound-absorbing material portion is arranged in the inlet section of the flow channel, wherein this inlet section does not protrude from a lateral wall of the housing of the sensor module as shown in Figs. 2A to 2C;
- Figs. 4A - 4C: show schematical cross sections of modifications of the embodiments shown in Figs. 2A to 2C, wherein a further sound-absorbing material portion is arranged in the inlet section of the flow channel;
- Figs. 5A - 5C: show schematical cross sections of different embodiments of a sensor module according to the present invention comprising a radial fan, wherein the sound-absorbing material portion is arranged in the inlet section of the flow channel;
- Figs. 6A - 6B: show schematical cross sections of different embodiments of a sensor module comprising a radial fan, wherein the sound-absorbing material portion is arranged in the inlet section of the flow channel, wherein this inlet section does not protrude from a lateral wall of the housing of the sensor module as shown in Figs. 5A to 5C;
- Figs. 7A - 7C: show schematical cross sections of different embodiments of a sensor module according to the present invention comprising an axial fan, wherein the sound-absorbing material portion is arranged in the outlet section of the flow channel;
- Figs. 8A - 8C: show schematical cross sections of different embodiments of a sensor module according to the present invention comprising a radial fan, wherein respective the sound-absorbing material portion is arranged in the outlet section of the flow channel;
- Figs.9A- 9C: show schematical cross sections of further embodiments of a sensor module according to the present invention comprising a radial fan, wherein the respective sound-absorbing material portion is arranged in the outlet section of the flow channel;
- Figs. 10A - 10C: show schematical cross sections of embodiments of a sensor module according to the present invention comprising an axial fan, wherein both inlet and outlet section of the flow channel each comprise a sound-absorbing material portion, and
- Fig. 11: shows a perspective view of an embodiment of a sensor module according to the present invention, wherein here the an outlet section of the flow channel that is delimited by a mounting bracket comprises a sound-absorbing material portion.

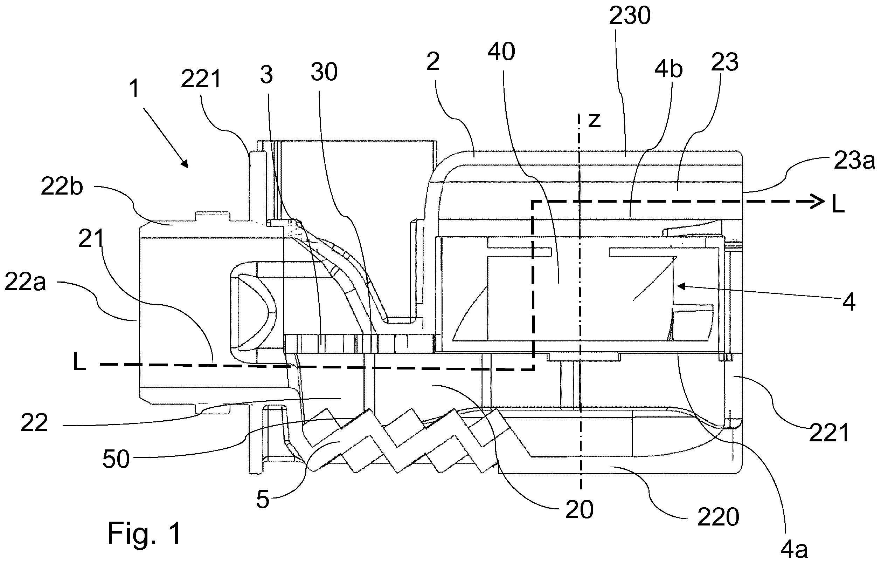

Fig. 1 shows a cross sectional view of an embodiment of a sensor module 1 for measuring at least one measurand, wherein the sensor module 1 comprises a housing 2 comprising a flow channel 21 having an inlet section 22 and an outlet section 23, wherein the housing 2 surrounds an internal space 20 of the housing 2. Further, the sensor module 1 comprises a sensor 3 arranged in the internal space 20, wherein the sensor 3 is configured to measure at least one measurand of a flow L (indicated by a dashed line) passing the sensor 3. To generate said flow L in the flow channel 21, a fan 4 is arranged in the internal space 20, wherein the fan 4 comprises a rotor 40 that is rotatable about a rotation axis z so that said flow L flows in said flow channel 21 from the inlet section 22 to the outlet section 23 and passes the sensor 3.

According to the present invention, the sensor module 1 comprises at least one sound-absorbing material portion 5 that forms an internal surface section 50 of the flow channel 21 to reduce noise generated by the fan 4.

To suck in air, the flow channel 21 comprises an inlet 22a at an end of the inlet section 22. Further, the flow channel 21 comprises an outlet 23a at an end of the outlet section 23 of the flow channel 21 to discharge the flow L. Particularly, the fan 4 comprises an intake side 4a via which the air is sucked into the fan 4, as well as a discharge side 4b, via which air is discharged out of the fan 4. Particularly, according to Fig. 1, the fan is arranged between the inlet section 22 and the outlet section 23 of the flow channel. Alternatively, the fan 4 may also be arranged in the outlet section 23 of the flow channel 21.

Preferably, the at least one sound-absorbing material portion 5 is comprised by the housing 2. Particularly, the at least one sound-absorbing material portion 5 is integrally formed with the housing 2, i.e., the first sound-absorbing material portion 5 forms an integral portion of the housing 2 that is formed out of the same material as adjacent portions of the housing 2. In this way, there is no need to employ an additional material layer to form the at least one sound-absorbing material portion 5. Preferably, the at least one sound-absorbing material portion 5 can be one of: a honey combed structure, a plurality of protrusions, a plurality of pyramids, a plurality of cuboids, a plurality of cylinders (particularly a plurality of circular cylinders). Preferably, these protrusions form a surface 50 comprising alternating peaks and valleys in the flowing direction of the flow L (dashed lines).

Preferably, the at least one sound-absorbing material portion 5 is generated by injection molding the housing or at least a part thereof together with the sound-absorbing portion 5 in one piece.

Furthermore, the sensor module 1 preferably comprises a printed circuit board 30 arranged in the internal space 20 of the housing 2, wherein the sensor 3 is preferably arranged on the printed circuit board 30. Furthermore, the sensor module 1 can comprise a connector arranged on the printed circuit board for making electrical contact with the sensor module 1. Further, the fan 4 preferably comprises a motor configured to rotate the rotor 40 about the rotation axis z, wherein particularly the motor is electrically connected to and/or arranged on the printed circuit board 30. Furthermore, the complete fan 4 can be arranged on the printed circuit board 30 or next to the print circuit board 30.

Further, according to an embodiment, the flow L flows in a flow direction (dashed line in Fig. 1) in the inlet section 22 of the flow channel 21 that extends at an angle to the axis of rotation which is in the range from 45° to 90°, particularly 90° as shown in Fig. 1.

Furthermore, according to an embodiment, the sensor 3 is arranged upstream of the fan 4 with respect to the flow direction of the flow L.

Preferably, the at least one measurand is can be one of: a temperature of the flow passing the sensor, a relative air humidity of the flow passing the sensor, a gas concentration of the flow passing the sensor. The sensor may also detect particulate matter or may measure a measurand relating to particulate matter (for example a particulate matter concentration, see for example above).

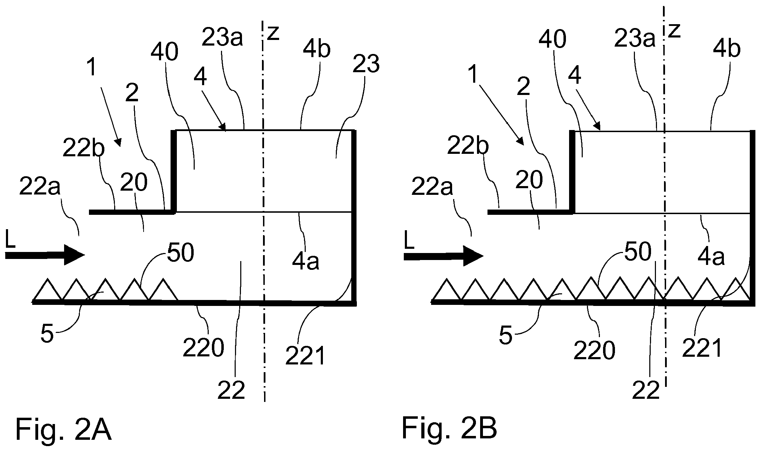

According to Fig. 1, the fan is an axial fan. Such fans 4 are preferably also used in the embodiments shown in Figs 2B to 2C, 3A to 3B, 4B to 4C, 7A to 7C, and 10A to 10C.

Particularly, as shown in Fig. 1 and the schematical cross sectional views of the embodiments shown in Figs. 2A to 2C, said internal surface section 50 of the flow channel 21 is an internal surface section 50 of the inlet section 22 of the flow channel 21 that is preferably formed by a bottom wall 220 of the inlet section 22 of the flow channel 21. Particularly, the respective bottom wall 220 faces an intake side 4a of the respective fan 4 in a direction of the rotation axis z of the fan 4. Furthermore, in Figs. 2A to 2C the fan 4 is positioned in the outlet section 23 of the flow channel 21 so that the discharge side 4b of the fan 4 can correspond to the outlet 23a of the flow channel 21.

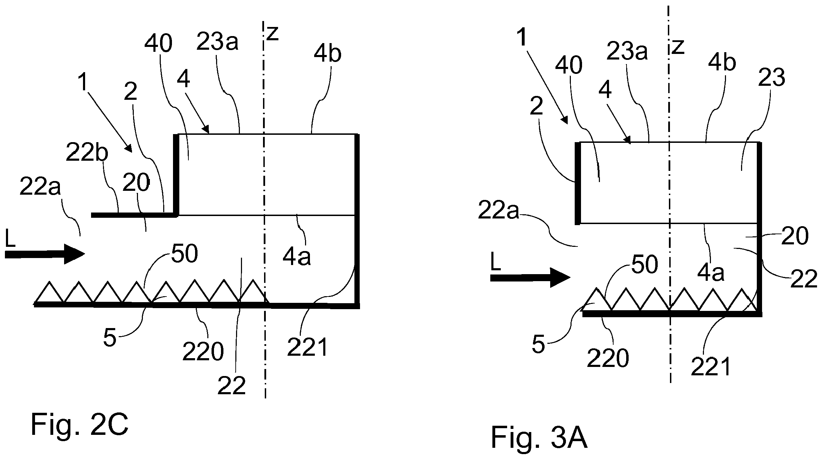

Particularly, as shown in Figs. 2B and 2C said internal surface section 50/sound absorbing material portion 5 of the inlet section 22 of the flow channel 21 can comprise a portion 50a that faces the intake side 4a lo the fan in the direction of the rotation axis z of the fan 4 such that said internal surface section 50/sound-absorbing material portion 5 overlaps with the intake side 4a. Particularly, as shown in Fig. 2B said internal surface section 50 of the inlet section 22 of the flow channel 21 extends from the inlet 22a of the inlet section 22 of the flow channel 21 up to a lateral wall 221 of the housing (or of the flow channel), which lateral wall 221 is connected to said bottom wall 220 and particularly extends along the rotation axis z of the fan 4.

In contrast thereto, in Fig. 2C, said internal surface section 50 extends from the inlet 22a of the inlet section 22 of the flow channel 21 and ends spaced apart from the lateral wall 221 of the housing 2 (or of the flow channel).

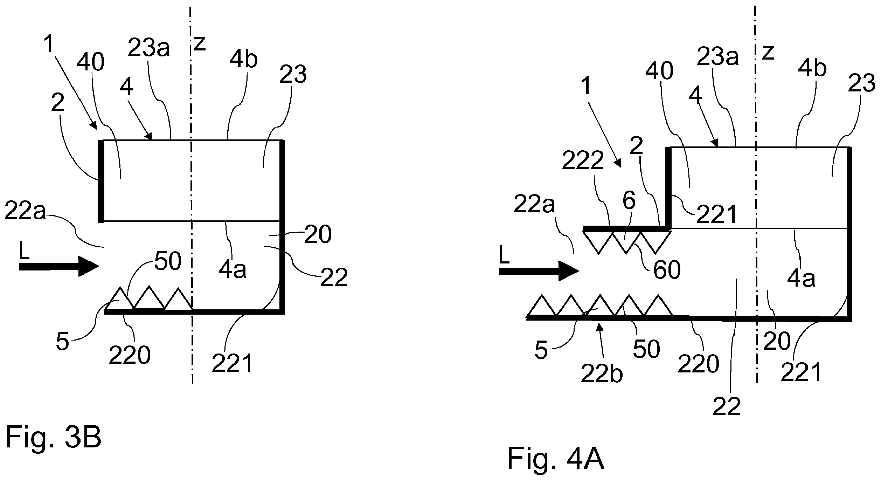

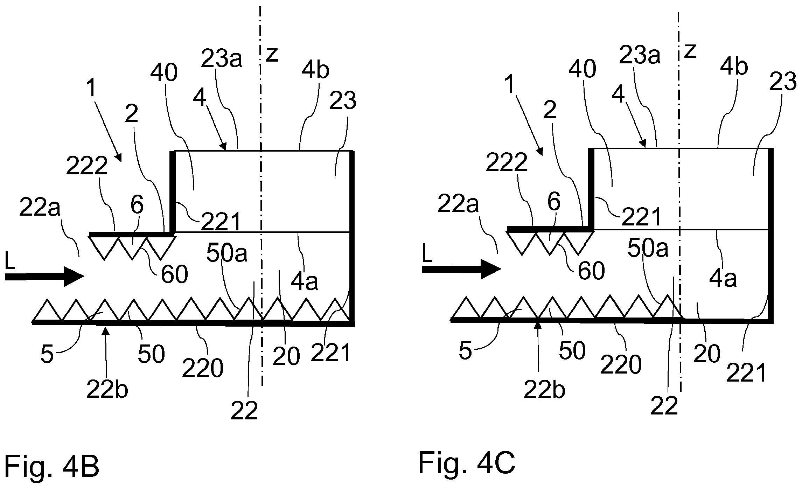

Furthermore, according to yet another alternative embodiment, said internal surface section 50 of the inlet section 22 of the flow channel 21 does not overlap with the intake side 4a of the fan 4 as shown in Fig. 4A.

Also, in the embodiments shown in Figs. 2A to 2B the housing 2 preferably comprises a portion 22b of the inlet section 22 of the flow channel 21 that protrudes from the lateral wall 221 of the housing 2 and forms said inlet 22a at an end of said protruding portion 22b of the inlet section 22 of the flow channel 21.

Alternatively, in case of the embodiments shown in Figs. 3A and 3B the internal surface section 50 of the inlet section 22 of the flow channel 21 faces the intake side 4a of the fan 4 and does not protrude past the intake side 4a in a direction parallel to the intake side 4a. Here, particularly, the inlet 22a of the inlet section 22 of the flow channel 21 is formed flush with the lateral wall 221 of the housing 2 in the lateral wall 221. Particularly, according to Fig. 3A, the sound-absorbing material portion 5 extends from the inlet 22a up to the lateral wall 221 and preferably extends over the complete inside of the bottom wall 220, while in Fig. 3B the internal surface section 50 / sound-absorbing material portion 5 ends spaced apart from the lateral wall 221. Furthermore, Figs. 4A to 4B show modifications of the embodiments shown in Fig. 2A to 2C, wherein according to Figs. 4A to 4B the respective sensor module 1 comprises a further sound-absorbing material portion 6 forming a further internal surface section 60 of the inlet section 22 of the flow channel 21 to reduce noise generated by the fan 4. Particularly, the respective further sound-absorbing material portion 6 of the inlet section 22 of the flow channel 20 faces the other sound-absorbing material portion 5 of the inlet section 22 of the flow channel 21 in the direction of the rotation axis z of the fan 4.

As before, in Figs, 4A to 4B the respective further sound-absorbing material portion 6 of the inlet section 22 of the flow channel 21 is comprised by the housing 2. Particularly, the further sound-absorbing material portion 6 of the inlet section 22 of the flow channel 21 is integrally formed with the housing 2, i.e., the further sound-absorbing material portion 6 forms an integral portion of the housing 2 that is formed out of the same material as adjacent portions of the housing (see also above).

Particularly, as can be seen from Figs. 4A to 4C the respective further internal surface section 60 of the inlet section 22 of the flow channel 21 is formed by a top wall 222 of the inlet section 22 of the flow channel 21, which top wall 222 faces the bottom wall 220 and is arranged adjacent the intake side 4a of the fan 4. Preferably, the respective further internal surface section 60 of the inlet section 22 of the flow channel 21 extends from the inlet 22a of the inlet section 22 of the flow channel 21 up to the intake side 4a of the fan 4.

Also the further sound-absorbing material portion 6 of the inlet section 22 of the flow channel 21 can form at least one of: a honey combed structure, a plurality of protrusions, a plurality of pyramids, a plurality of cuboids, a plurality of cylinders (particularly a plurality of circular cylinders). Preferably, these protrusions (for example pyramids, cuboids, cylinders etc.) are in turn preferably arranged such that they form a surface comprising alternating peaks and valleys in the flowing direction of the flow L.

As described above, the further sound-absorbing material portion 6 of the inlet section 22 of the flow channel 21 can be an injection-molded material portion that is particularly injection molded together with adjacent portions of the housing 2 in one piece.

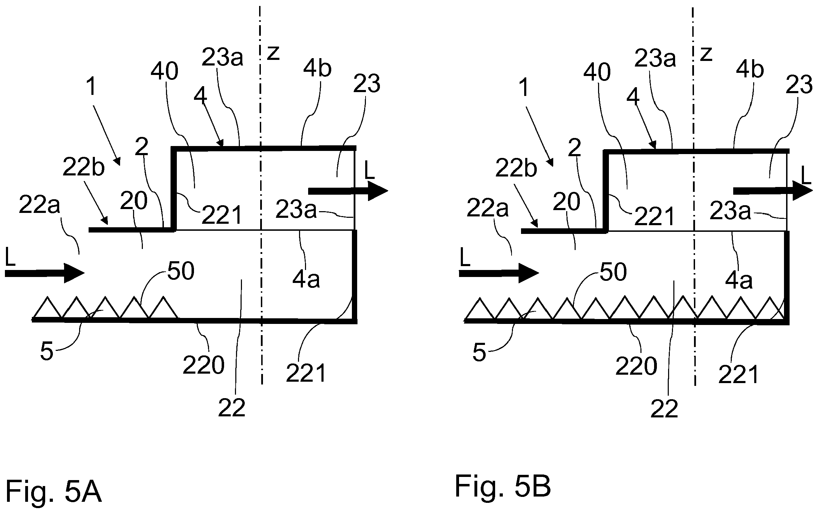

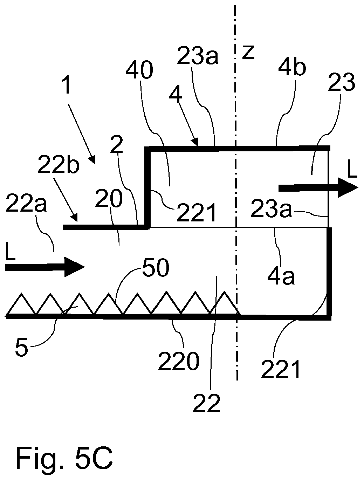

Further, Figs. 5A to 5C show schematical cross sectional views of modifications of the embodiments shown in Fig. 2A to 2C, wherein in contrast to Figs. 2A to 2C the fan 4 is not an axial fan 4 but a radial fan 4. Therefore, the outlet 23a is arranged in the lateral wall 221 of the housing 2. Also here, the fan 4 is arranged in the outlet section 23 of the flow channel 21 so that the discharge side 4b of the fan 4 can correspond to the outlet 23a of the flow channel 21.

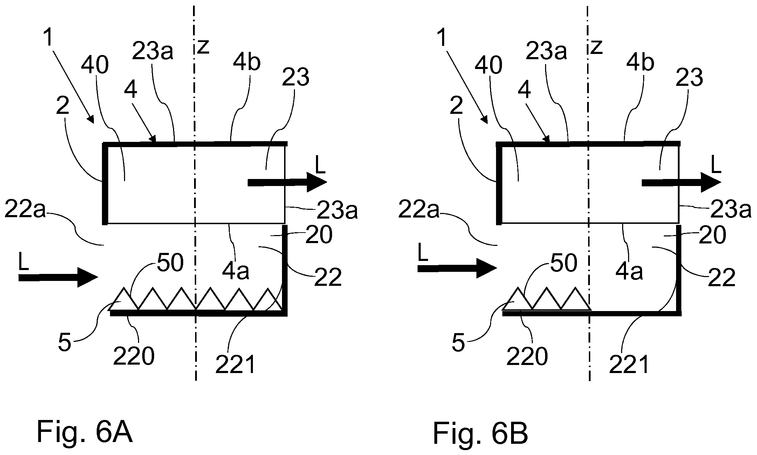

In the same manner, the embodiments of the sensor module 1 shown in Figs. 6A and 6B correspond to modifications of the embodiments shown in Figs. 3A and 3B, wherein in contrast to Figs. 3A and 3B, the fan 4 is not an axial fan 4 but a radial fan 4. Therefore, the outlet 23a is now arranged in the lateral wall 221 of the housing 2. Also here, the fan 4 is arranged in the outlet section 23 of the flow channel 21 so that the discharge side 4b of the fan 4 can correspond to the outlet 23a of the flow channel 21.

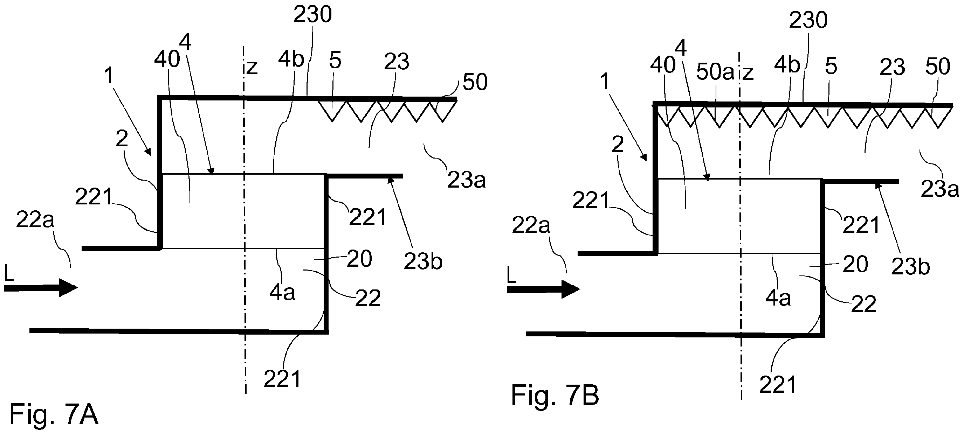

Furthermore, Figs. 7A to 7B show schematical cross sectional views of embodiments of the sensor module 1 that correspond to modifications of the embodiment shown in Fig. 1, wherein according to Figs. 7A to 7B, the internal surface section 60 of the outlet section 23 of the flow channel 21 is formed by a top wall 230 of the outlet section 23 of the flow channel 21, which top wall 230 faces a bottom wall 231 of the housing 2 / outlet section 23 of the flow channel 21.

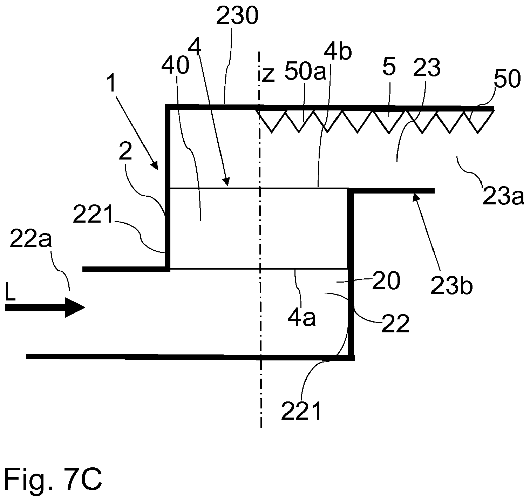

Particularly, as shown in Fig. 7B, said internal surface section 50 of the outlet section 23 of the flow channel 21 extends from the outlet 23a of the outlet section 23 of the flow channel 21 up to a lateral wall 221 of the housing 2 and therefore overlaps with or faces the discharge side 4b of the fan 4. Alternatively, as shown in Fig. 7C, said internal surface section 60 extends from the outlet 23a of the outlet section 23 of the flow channel 21 and ends spaced apart from said lateral wall 221 of the housing 2 / flow channel 21, which lateral wall 221 is connected to said top wall 230 and particularly extends along the rotation axis z of the fan 4. According to a third embodiment shown in Fig. 7A, said internal surface section 50 of the outlet section 23 of the flow channel 21 may also not overlap with the discharge side 4b of the fan 4.

Furthermore, in Figs. 7A to 7C, a portion 23b of the outlet section 23 of the flow channel 21 preferably protrudes from a lateral wall 221 of the housing 2 and forms an outlet 23a at an end of said portion 23b of the outlet section 23 of the flow channel 21.

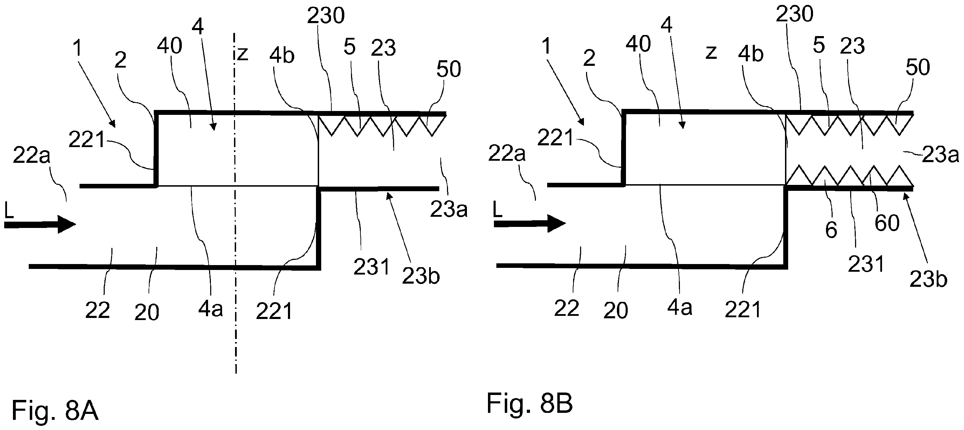

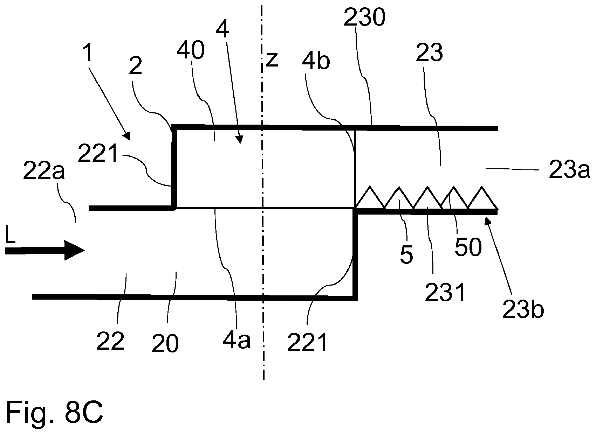

Figs. 8A to 8C show modifications of the embodiments shown in Figs. 7A to 7C, wherein in contrast to Figs. 7A to 7C the fan 4 is a radial fan 4 so that the discharge side 4b faces the outlet 23a of the outlet section 23 of the flow channel. As in Figs. 7A to 7C, the housing comprises a protruding portion 23b forming comprising the outlet 23a at an end of this portion 23B. According to Fig. 8A the sensor module 1 comprises a sound-absorbing material portion 5 that forms an internal surface section 50 of the outlet section 23 of the flow channel 21 to reduce noise generated by the fan 4. Particularly, the internal surface section 50 of the outlet section 23 of the flow channel 21 is formed by the top wall 230 of the outlet section 23 of the flow channel 21, which top wall 230 faces a bottom wall 231 of the outlet section 23 of the flow channel 21. Particularly, the internal surface section 50 extends from the outlet 23a up to the discharge side 4b of the fan. In addition, as shown in Fig. 8B, the module 1 can comprises a further sound-absorbing material portion 6 that forms a further internal surface section 60 formed by the bottom wall 231. This further internal surface section 60 preferably extends from the outlet 23a up to the discharge side 4b. According to the alternative shown in Fig. 8C only this sound-absorbing material portion 5 / internal surface section 50 formed by the bottom side 231 can be present.

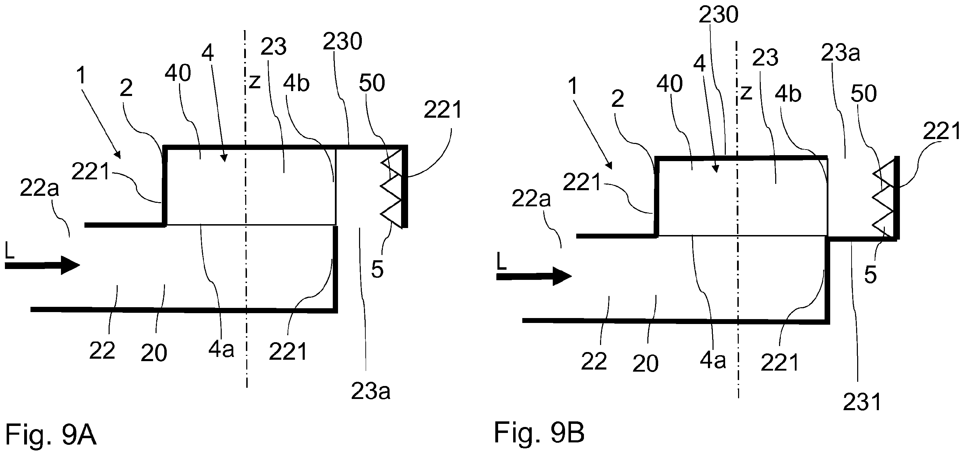

Furthermore, according to the embodiments shown in Figs. 9A to 9C, the outlet 23a of the outlet section 23 of the flow channel 22 of the module 1 extends perpendicular to a lateral wall 221 of the housing 2 of the sensor module 1, wherein here, the respective internal surface section 50/sound-absorbing material portion 5 of the outlet section 23 of the flow channel 21 is formed by said lateral wall 221 of the housing 2 (or of the outlet section 23 of the flow channel 21), which lateral wall 221 faces the discharge side 4b of the fan 4, particularly in a direction perpendicular to the rotation axis z of the fan 4. According to Fig. 9A, the lateral wall 221 connects to a top wall 230 of the flow channel 21, while according to Fig. 9B the lateral wall connects to a bottom wall 231 of the flow channel 21 (i.e. in Figs. 9A and 9B the outlets 23a open in opposite directions).

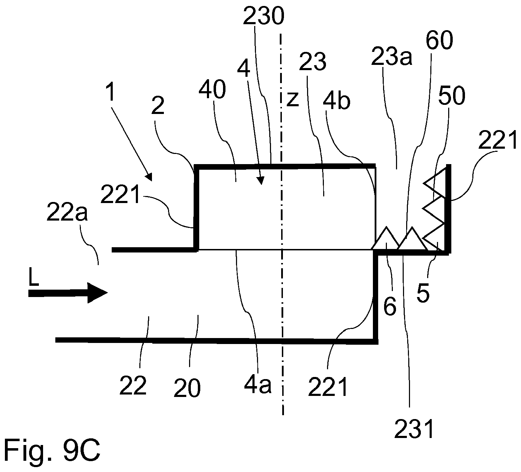

Furthermore, according to Fig. 9C (which corresponds to a modification of the embodiment shown in Fig. 9B), the sensor module 1 comprises a further sound-absorbing material portion 6 forming a further internal surface section 60 of the outlet section 23 of the flow channel 21 to reduce noise generated by the fan 4, wherein the further sound-absorbing material portion 6 of the outlet section (23) of the flow channel 21 is arranged adjacent said at least one sound-absorbing material portion 5 of the outlet section 23 of the flow channel 21. Particularly, said further internal surface section 60 of the outlet section 23 of the flow channel 21 is formed by said bottom wall 231 of the outlet section 23 of the flow channel 21, which bottom wall 231 faces the outlet 23a of the outlet section 23 of the flow channel 21 and connects (for example extends perpendicular) to said lateral wall 221, i.e., the further internal surface section 60 extends at an angle, particularly 90°, with respect to the internal surface section 50.

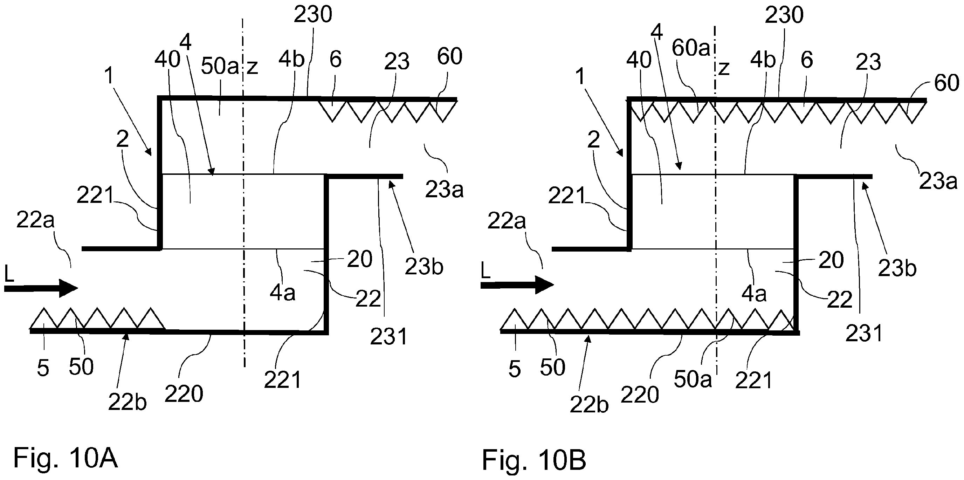

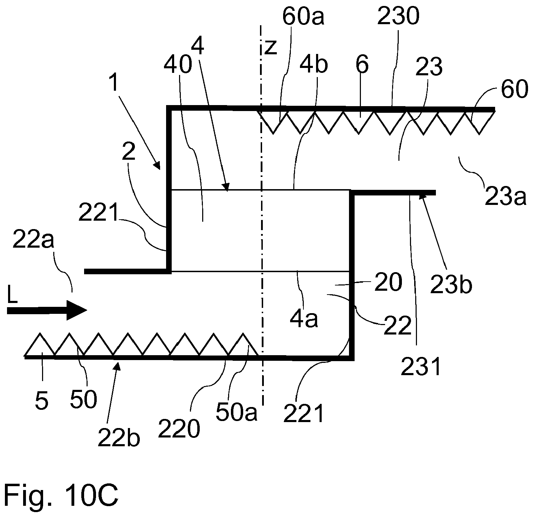

Finally, the sound-absorbing material portions 5 described with reference to Figs. 7A to 7C can also be combined with further sound-absorbing material portions 6 that form further internal surface sections 60, respectively, of the inlet section 22 of the flow channel 21 as shown in Fig. 10A to 10C, wherein according to Figs. 10B and 10C the respective further internal surface section 60 can overlap with the intake side 4a of the fan 4 (in Fig. 10C it ends spaced apart from the lateral wall 221 of the housing 2). Alternatively, the further internal surface section 60 can comprise no overlap with the intake side 4a of the fan as shown in Fig. 10A.

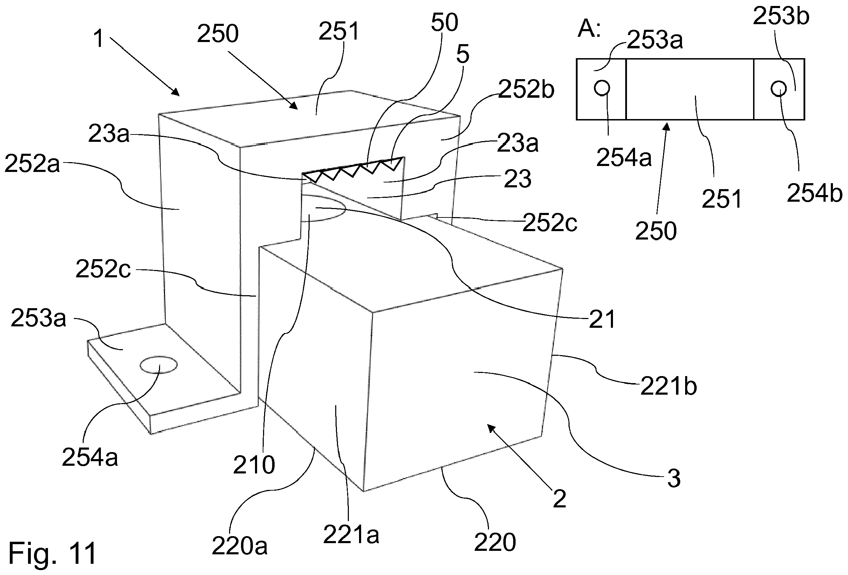

Furthermore, Fig. 11 shows an embodiment of a sensor module 1, wherein here said internal surface section 50 of the flow channel is an internal surface section of the outlet section 23 of the flow channel 21 and formed by a mounting bracket 250, namely by a portion 251 of the mounting bracket 250 that faces an opening 210 of the housing 2. Such a configuration is preferably used in case the sensor 3 of the sensor module 1 is configured to measure a measurand related to particulate matter (see above).

As shown in Fig. 11, said portion 251 comprises a sound-absorbing material portion 5 that is preferably integrally formed with the mounting bracket 250 and can be designed as described herein. Particularly the sound-absorbing material portion 5 can be integrally formed with the mounting bracket (for example by way of injection molding. Particularly, the sound-absorbing material portion 5 can be one of: a honey combed structure, a plurality of protrusions, a plurality of pyramids, a plurality of cuboids, a plurality of cylinders (particularly a plurality of circular cylinders). Preferably, these protrusions form a surface 50 comprising alternating peaks and valleys in the flowing direction of the flow L (dashed lines).

The sound-absorbing material portion 5 forms an internal surface section 50 of an outlet section 23 of the flow channel 21 of the sensor module 1, wherein this surface section 50 faces said opening 210. This opening connects a portion of the flow channel 21 that runs inside the housing 2 to the outlet section 23 of the flow channel 21, which outlet section 23 is delimited by the mounting bracket 250, such that the outlet section 23 of the flow channel 21 comprises two opposing outlets 23a. Particularly, the mounting bracket 250 can comprise a first and a second arm 252a, 252b, wherein the first arm 252a is connected to a first end of said portion 251 of the mounting bracket 250 and the second arm 252b is connected to a second end of said portion 251 of the mounting bracket 250, particularly such that the two arms 252a, 252b and said portion 251 of the mounting bracket 250 form a U-shaped structure. The arms 252a, 252b can comprise recesses 252c for receiving the housing 2 of the sensor module 1. Furthermore, particularly, said opening 210 of the housing 2 via which the flow channel 21 is led out of the housing 2, is arranged between the two arms 252a, 252b of the mounting bracket 250.

Preferably, the arms 252a, 252b of the mounting bracket 250 run parallel to one another. Furthermore, the first arm 252a extends along a first lateral wall 221a of the housing 2 towards a bottom wall 220 of the housing 2, and the second arm 252b extends along a second lateral wall 221b of the housing 2 towards the bottom wall 220 of the housing 2, wherein the first lateral wall 221a faces away from the second lateral wall 221b of the housing 2.

As further shown in Fig. 11 (cf. also detail A showing a top view of the mounting bracket 250), the arms 252a, 252b preferably each comprises an angled end section 253a, 253b that can be flush with a surface 220a of the bottom wall 220 of the housing 2.

Furthermore, the end sections 253a, 253b of the arms 252a, 252b preferably each comprise a through-opening 254a, 254b for inserting a screw or bolt for fasting the mounting bracket 250 (and therewith the housing 2) to a surface (for example of another device).

The sensor module according to Fig. 11 can comprise a fan 4 as described herein (not indicated in Fig. 11). The flow channel 21 can comprises an inlet section 22 that can comprise an inlet 22a arranged in the housing 2 (for example in the bottom wall 220 or in another part of the housing 2) so that the flow channel 21 can extend from the inlet to the to the outlets 23a of the outlet section 23 via said opening 210 of the housing above which said portion 251 of the mounting bracket 250 extends. The sensor 3 can be arranged along the flow channel 21 (for example on a printed circuit board) so that a flow generated by the fan 4 passes the sensor 3.

## Claims

1. A sensor module (1) for measuring at least one measurand, wherein the sensor module (1) comprises:
- a housing (2) surrounding an internal space (20) of the housing (2),
- a flow channel (21) extending through the housing (2) and comprising an inlet section (22) and an outlet section (23),
- a sensor (3) configured to measure at least one measurand of a flow passing the sensor (3), and
- a fan (4) arranged in the internal space (20), wherein the fan (4) comprises a rotor (40) that is rotatable about a rotation axis (z), wherein the fan (4) is configured to generate a flow (L) in said flow channel (21) flowing through the inlet section (22) and to the outlet section (23) so that the flow (L) passes the sensor (3),
**characterized in that**
the sensor module (1) comprises at least one sound-absorbing material portion (5) forming an internal surface section (50) of the flow channel (21) to reduce noise generated by the fan (4).

2. The sensor module according to claim 1, **wherein** the at least one sound-absorbing material portion (5) forms at least one of: a honey combed structure, a plurality of protrusions, a plurality of pyramids, a plurality of cuboids, a plurality of cylinders.

3. The sensor module according to claim 1 or 2, **wherein** the at least one sound-absorbing material portion (5) is comprised by the housing (2); wherein preferably the at least one sound-absorbing material portion (5) is integrally formed with the housing (2).

4. The sensor module according to claim 1 or 2, **wherein** the at least one sound-absorbing material portion (5) is comprised by a mounting bracket (250), wherein the mounting bracket (250) is configured to mount the housing (2) to a surface, wherein the mounting bracket (250) delimits a portion (23) of the flow channel (21), wherein preferably the at least one sound-absorbing material portion (5) is integrally formed with the mounting bracket (250).

5. The sensor module according to one of the preceding claims, **wherein** said internal surface section (50) of the flow channel (21) is an internal surface section (50) of the inlet section (22) of the flow channel (21).

6. The sensor module according to claim 5, **wherein** said internal surface section (50) of the inlet section (22) of the flow channel (21) is formed by a bottom wall (220) of the inlet section (22) of the flow channel (21), which bottom wall (220) faces an intake side (4a) of the fan (4) in a direction of the rotation axis (z) of the fan (4).

7. The sensor module according to one of the preceding claims, **wherein** the sensor module (1) comprises a further sound-absorbing material portion (6) forming a further internal surface section (60) of the inlet section (22) of the flow channel (21) to reduce noise generated by the fan (4), wherein the further sound-absorbing material portion (6) of the inlet section (22) of the flow channel (20) faces the at least one sound-absorbing material portion (5) of the inlet section (22) of the flow channel (21) in the direction of the rotation axis (z) of the fan (4).

8. The sensor module according to claim 7, **wherein** said further internal surface section (60) of the inlet section (22) of the flow channel (21) is formed by a top wall (222) of the inlet section (22) of the flow channel (21), which top wall (222) faces the bottom wall (220) and is arranged adjacent the intake side (4a) of the fan (4).

9. The sensor module according to one of the claims 1 to 3, **wherein** said internal surface section (50) of the flow channel (21) is an internal surface section (50) of the outlet section (23) of the flow channel (21).

10. The sensor module according to claim 9, **wherein** said internal surface section (50) of the outlet section (23) of the flow channel (22) is formed by one of:
- a top wall (230) of the outlet section (23) of the flow channel (21), which top wall (230) faces a discharge side (4b) of the fan (4) or is arranged adjacent a discharge side (4b) of the fan (4),
- a lateral wall (221) of the housing (2), which lateral wall (221) is arranged adjacent an outlet (23a) of the outlet section (23) of the flow channel (21) and faces a discharge side (4b) of the fan (4),
- a lid of the housing, wherein the housing comprises a separate bottom part connected to the lid.

11. The sensor module according to one of the claims 9 to 10, **wherein** the sensor module (1) comprises a further sound-absorbing material portion (6) forming a further internal surface section (60) of the outlet section (23) of the flow channel (21) to reduce noise generated by the fan (4), wherein the further sound-absorbing material portion (6) of the outlet section (23) of the flow channel (21) faces the at least one sound-absorbing material portion (5) of the outlet section (23) of the flow channel (21) or is arranged adjacent said at least one sound-absorbing material portion (5) of the outlet section (23) of the flow channel (21).

12. The sensor module according to claim 4, **wherein** said internal surface section (50) of the flow channel (21) is an internal surface section (50) of the outlet section (23) of the flow channel (21), and wherein said internal surface section (50) of the outlet section (23) of the flow channel (22) is formed by the mounting bracket (250).

13. The sensor module according to one of the claims 1 to 6, **wherein** the sensor module (1) comprises a further sound-absorbing material portion (6) forming an internal surface section (60) of the outlet section (23) of the flow channel (21) to reduce noise generated by the fan (4).

14. The sensor module according to one of the preceding claims, **wherein** the rotor (40) is configured to suck air in the direction of the axis of rotation (z) and to output air in a radial direction of the rotor (40).

15. The sensor module according to one of the claims 1 to 13, **wherein** the rotor (40) is configured to suck air in the direction of the axis of rotation (z) and to output air in the direction of the axis of rotation (z).
